# EUROPÄISCHE PATENTSCHRIFT

(11) **EP 3 080 785 B1**
(45) Veröffentlichungstag und Bekanntmachung des Hinweises auf die Patenterteilung: **08.05.2024**
(21) Anmeldenummer: 14812132.0
(22) Anmeldetag: 09.12.2014
(51) Int. Cl.: G07D 11/12, G07D 11/14, G07D 11/16, G07D 11/22, G07D 11/235

(54) **EINGABEMODUL UND VERFAHREN ZUM ZUFÜHREN VON WERTDOKUMENTEN ZU EINER WERTDOKUMENTBEARBEITUNGSVORRICHTUNG SOWIE SYSTEM ZUR BEARBEITUNG VON WERTDOKUMENTEN**
INTAKE MODULE AND METHOD FOR SUPPLYING VALUE DOCUMENTS TO A VALUE DOCUMENT PROCESSING DEVICE AND A SYSTEM FOR PROCESSING VALUE DOCUMENTS
MODULE D'ENTRÉE ET PROCÉDÉ D'INTRODUCTION DE DOCUMENTS DE VALEUR DANS UN DISPOSITIF DE TRAITEMENT DE DOCUMENTS DE VALEUR AINSI QUE SYSTÈME DE TRAITEMENT DE DOCUMENTS DE VALEUR

(30) Priorität: 11.12.2013 DE 102013020895
(43) Veröffentlichungstag der Anmeldung: 19.10.2016
(73) Patentinhaber: Giesecke+Devrient Currency Technology GmbH, 81677 München (DE)
(72) Erfinder: DOPFER, Peter, 82269 Geltendorf (DE); KÖNIGER, Wolfgang, 85757 Karlsfeld (DE); GULDNER, Evelyn, 80992 München (DE); DEMMELER, Erwin, 87700 Memmingen (DE)
(74) Vertreter: Giesecke+Devrient IP
(86) Internationale Anmeldenummer: PCT/EP2014/003292
(87) Internationale Veröffentlichungsnummer: WO 2015/086145

(56) Entgegenhaltungen:
- EP-A2- 2 620 377
- US-A- 5 498 122
- US-A1- 2001 031 197

## Beschreibung

Die Erfindung betrifft ein Eingabemodul und ein Verfahren zum Zuführen von Wertdokumenten zu einer Wertdokumentbearbeitungsvorrichtung sowie ein System zur Bearbeitung von Wertdokumenten gemäß den unabhängigen Ansprüchen.

In Wertdokumentbearbeitungsvorrichtungen werden Wertdokumente, wie zum Beispiel Banknoten, Schecks oder Gutscheine, hinsichtlich verschiedener Eigenschaften, wie z.B. Stückelung, Echtheit und Zustand, geprüft und abhängig vom Ergebnis der Prüfung unterschiedlich behandelt. So werden z.B. bei der Prüfung als echt eingestufte Banknoten wieder in den Umlauf gegeben, sofern diese gleichzeitig bestimmte Fitnesskriterien erfüllen. Dagegen werden als unecht oder fälschungsverdächtig eingestufte Banknoten aus dem Verkehr gezogen und verschmutzte, abgenutzte oder defekte Banknoten einem Schredder zur Vernichtung zugeführt. Ferner können in Wertdokumentbearbeitungsvorrichtungen die jeweils eingegebenen Wertdokumente gezählt und/oder deren Gesamtwert ermittelt werden.

Vor der Bearbeitung in einer Wertdokumentbearbeitungsvorrichtung werden die Wertdokumente üblicherweise manuell vorbereitet. Dazu werden von den meist stapelweise angelieferten Wertdokumenten Informationen, wie z.B. Angaben über den Einzahler, eine Kontonummer, eine Transaktionsnummer, die Menge oder der Wert der ein sog. Deposit bildenden Wertdokumente, erfasst und die Wertdokumente stapelweise in einen Wertdokumentbehälter eingelegt, in welchem die einzelnen Wertdokumentstapel durch sogenannte Headerkarten oder Trennkarten voneinander getrennt sind. Der mit verschiedenen Wertdokumentstapeln beladene Wertdokumentbehälter wird dann zu einer Wertdokumentbearbeitungsvorrichtung gebracht, an welcher die im Wertdokumentbehälter befindlichen Wertdokumente stapelweise einem Eingabefach der Wertdokumentbearbeitungsvorrichtung zur weiteren Bearbeitung zugeführt werden.

Aus DE 10 2007 043 129 A1 ist bekannt, die an einem Vorbereitungsplatz vorbereiteten Wertdokumente in einen Behälter eines fest installierten Behälter-Transportsystems einzulegen, durch welches die Behälter zur Wertdokumentbearbeitungsvorrichtung transportiert werden, an welcher die Behälter von einer Bedienperson oder einem Roboter entgegengenommen und die darin befindlichen Wertdokumente in ein Eingabefach der Wertdokumentbearbeitungsvorrichtung eingelegt werden.

Aus DE 10 2009 042 891 A1 ist ferner ein Transportsystem für Wertdokumentbehälter bekannt, das direkt an die Wertdokumentbearbeitungsvorrichtung angeschlossen ist und mit Wertdokumenten beladene Behälter zum Eingabefach der Wertdokumentbearbeitungsvorrichtung transportiert, wo die im Behälter befindlichen Wertdokumente mittels eines Greifers aus dem Behälter entnommen und in das Eingabefach der Vorrichtung eingelegt werden.

Weitere Behälter-Transportsysteme sind aus US5498122 A und aus US2001/031197 A1 bekannt.

Es ist Aufgabe der vorliegenden Erfindung, ein Eingabemodul sowie ein entsprechendes Verfahren zum Zuführen von Wertdokumenten zu einer Wertdokumentbearbeitungsvorrichtung sowie ein System zur Bearbeitung von Wertdokumenten anzugeben, welches möglichst kompakt und einfach aufgebaut bzw. durchzuführen ist.

Diese Aufgabe wird durch das Eingabemodul, Verfahren und System gemäß den unabhängigen Ansprüchen gelöst.

Das erfindungsgemäße Eingabemodul zum Zuführen von Wertdokumenten, insbesondere Banknoten, zu mindestens einer Wertdokumentbearbeitungsvorrichtung weist auf: eine Entnahmeeinrichtung zur Entnahme von Wertdokumenten aus einem in einer Entnahmeposition befindlichen (ersten) Behälter und zum Zuführen der entnommenen Wertdokumente zu einer Wertdokumentbearbeitungsvorrichtung; eine Ausgabeeinrichtung zur Aufnahme mindestens eines Behälters in einer Ausgabeposition, in welcher der Behälter entnommen werden kann; und eine Beförderungseinrichtung, die dazu ausgebildet ist, einen in der Aufnahmeposition befindlichen Behälter aus der Aufnahmeposition in die Entnahmeposition zu befördern, in der Wertdokumente durch die Entnahmeeinrichtung aus dem Behälter entnommen werden können, und die dazu ausgebildet ist, einen in der Entnahmeposition befindlichen Behälter aus der Entnahmeposition in die Ausgabeposition zu befördern, in welcher der Behälter von der Ausgabeeinrichtung aufgenommen werden kann. Die Entnahmeeinrichtung kann als Greifer ausgebildet sein, der die Wertdokumente stapelweise aus dem Behälter entnehmen kann. Das Eingabemodul weist insbesondere eine Aufnahmeöffnung auf, an welcher ein mit Wertdokumenten beladener Behälter aufgenommen werden kann.

Insbesondere kann die Beförderungseinrichtung einen nachfolgenden zweiten Behälter derart befördern, dass der in der Entnahmeposition befindliche erste Behälter durch den von der Beförderungseinrichtung beförderten zweiten Behälter aus der Entnahmeposition in die Ausgabeposition, in welcher der erste Behälter von der Ausgabeeinrichtung aufgenommen werden kann, transportiert wird und der zweite Behälter anschließend in die Entnahmeposition zurückbefördert wird.

Das erfindungsgemäße Verfahren zum Zuführen von Wertdokumenten, insbesondere Banknoten, zu mindestens einer Wertdokumentbearbeitungsvorrichtung weist folgende Schritte auf:
a) (Manuelles oder automatisches) Bereitstellen mindestens eines Behälters, in welchem sich Wertdokumente befinden, in einer Aufnahmeposition einer Aufnahmeeinrichtung des Eingabemoduls,
b) Befördern des in der Aufnahmeposition befindlichen Behälters aus der Aufnahmeposition in eine Entnahmeposition des Eingabemoduls (10), in der Wertdokumente aus dem Behälter entnommen werden,
c) Entnehmen von Wertdokumenten aus dem in der Entnahmeposition befindlichen Behälter mit Hilfe einer Entnahmeeinrichtung des Eingabemoduls,
d) Zuführen der aus dem Behälter entnommenen Wertdokumente zu einer Wertdokumentbearbeitungsvorrichtung mit Hilfe der Entnahmeeinrichtung des Eingabemoduls,
e) Befördern des in der Entnahmeposition befindlichen Behälters aus der Entnahmeposition in eine Ausgabeposition, in welcher der Behälter von einer Ausgabeeinrichtung des Eingabemoduls aufgenommen wird,
f) (Manuelles oder automatisches) Entnehmen des in der Entnahmeposition befindlichen Behälters.

Insbesondere können bei dem Verfahren folgende Schritte durchgeführt werden: Entnahme von Wertdokumenten aus einem in einer Entnahmeposition befindlichen ersten Behälter; Zuführen der entnommenen Wertdokumente zu einer Wertdokumentbearbeitungsvorrichtung; Beförderung eines zweiten Behälters, in welchem sich vorzugsweise Wertdokumente befinden, derart, dass der in der Entnahmeposition befindliche erste Behälter, aus welchem Wertdokumente entnommen wurden, durch den beförderten zweiten Behälter aus der Entnahmeposition in eine Ausgabeposition transportiert wird, in welcher der erste Behälter aufgenommen wird; und Beförderung des zweiten Behälters zurück in die Entnahmeposition.

Das erfindungsgemäße System zur Bearbeitung von Wertdokumenten, insbesondere Banknoten, weist eine Wertdokumentbearbeitungsvorrichtung auf zur Bearbeitung, insbesondere Prüfung und/oder Zählung und/ oder Sortierung, von Wertdokumenten und zeichnet sich ferner durch das erfindungsgemäße Eingabemodul aus. Das erfindungsgemäße Eingabemodul kann hierbei lediglich temporär im Bereich der Wertdokumentbearbeitungsvorrichtung angeordnet sein, indem es beispielweise an die Wertdokumentbearbeitungsvorrichtung herangefahren wird. Es ist aber auch möglich, dass das Eingabemodul permanent mit der Wertdokumentbearbeitungsvorrichtung gekoppelt ist und/oder einen festen Bestandteil der Wertdokumentbearbeitungsvorrichtung bildet.

Die Erfindung basiert auf dem Ansatz, zum Zuführen von in Behältern befindlichen Wertdokumenten, insbesondere Banknoten, zu einer Banknotenbearbeitungsvorrichtung ein Eingabemodul vorzusehen, an welchem mit Banknotenstapeln gefüllte Behälter bereitgestellt werden können, die dann einzeln im Inneren des Eingabemoduls zu einer Entnahmeposition befördert werden, an welcher die im jeweiligen Behälter befindliche Banknoten dann mittels einer Entnahmeeinrichtung, beispielsweise einem Greifer, stapelweise aus dem Behälter entnommen und in ein Eingabefach einer Banknotenbearbeitungsvorrichtung eingelegt werden. Der nach der Banknotenentnahme noch in der Entnahmeposition befindliche (leere oder nahezu leere) Behälter wird anschließend in eine Ausgabeposition transportiert, in welcher dieser dann von einer Bedienperson entnommen werden kann.

Durch die Erfindung wird somit der Aufbau des Eingabemoduls bzw. Systems vereinfacht und dessen Kompaktheit erhöht sowie der einfacher Ablauf beim Zuführen von Wertdokumenten zu einer Wertdokumentbearbeitungsvorrichtung gewährleistet.

Der Transport des in der Entnahmeposition befindlichen leeren Behälters zur Ausgabeposition wird hierbei beispielsweise dadurch bewerkstelligt, dass ein, vorzugsweise mit Banknoten gefüllter, nachfolgender Behälter zur Entnahmeposition befördert wird und dabei den in der Entnahmeposition befindlichen leeren Behälter mitnimmt und aus der Entnahmeposition heraus bewegt. Der nachfolgende Behälter wird dann solange in Richtung Ausgabeposition befördert, bis der durch ihn transportierte leere Behälter in der Ausgabeposition aufgenommen und gehalten wird. Der nachfolgende Behälter wird anschließend wieder zur Entnahmeposition zurück befördert und dort, vorzugsweise mittels einer geeigneten Halterung, in der Entnahmeposition gehalten, in welcher dieser nun für die Entnahme der darin befindlichen Banknoten mittels Entnahmeeinrichtung zur Verfügung steht.

Durch den gemeinsamen Transport des nachfolgenden beladenen Behälters zusammen mit dem leeren vorausgehenden Behälter bis zur Aufnahme des leeren Behälters in der Ausgabeposition und dem anschließenden Zurückfahren des beladenen Behälters in die Entnahmeposition wird erreicht, dass lediglich eine Beförderungseinheit, beispielsweise in Form eines Lifts, benötigt wird, um einerseits einen nachfolgenden, noch beladenen Behälter in die Entnahmeposition zu befördern und andererseits einen in der Entnahmeposition befindlichen leeren Behälter in die Ausgabeposition zu transportieren. Andernfalls müsste die Beförderungseinrichtung aufwändiger konstruiert sein.

Im Zusammenhang mit der Erfindung ist unter einem "ersten Behälter" vorzugsweise jeder Behälter zu verstehen, der aus der Entnahmeposition in die Ausgabeposition transportiert werden soll. Im Zusammenhang mit der vorliegenden Erfindung wird der erste Behälter auch als "vorausgehender Behälter" bezeichnet. Ferner ist unter einem "zweiten Behälter" vorzugsweise jeder Behälter zu verstehen, der dem in der Entnahmeposition befindlichen ersten Behälter als nächstes folgt und daher auch als "nachfolgender Behälter" bezeichnet werden kann. Grundsätzlich ist es dabei unerheblich, ob sich im ersten und/oder zweiten Behälter Wertdokumente befinden. Vorzugsweise ist jedoch der von der Entnahmeposition in die Ausgabeposition zu transportierende erste Behälter vollständig entleert, wohingegen sich im nachfolgenden zweiten Behälter Wertdokumente befinden.

Vorzugsweise ist die Beförderungseinrichtung zur Beförderung des zweiten Behälters derart ausgebildet, dass beim Transport des ersten Behälters von der Entnahmeposition in die Ausgabeposition der zweite Behälter eine Seite, insbesondere die Unterseite, des ersten Behälters berührt und/ oder der zweite Behälter am ersten Behälter andockt und/oder an den ersten Behälter ankoppelt. Durch die unmittelbare Berührung der Behälter bzw. das Andocken oder Ankoppeln wird eine sichere und zugleich einfach zu realisierende Kopplung der beiden Behälter erreicht. Eine Kopplung der beiden Behälter kann beispielsweise durch Formschluss und/oder Kraftschluss erfolgen. Eine Kopplung durch Berührung der Unterseite des ersten Behälters ist insbesondere dann vorteilhaft, wenn dieser in eine oberhalb der Eingabeposition liegende Ausgabeposition befördert werden soll, da in diesem Fall der zu transportierende erste Behälter einfach auf dem beförderten zweiten Behälter aufliegen kann. Durch eine geeignete Gestaltung der Unterseite und des oberen Randes der Behälter kann zusätzlich erreicht werden, dass die Unterseite des ersten Behälters in den oberen Rand des zweiten Behälters eingesteckt werden kann, so dass der zweite Behälter besonders zuverlässig mit dem ersten Behälter gekoppelt werden kann.

Es ist ferner bevorzugt, die Beförderungseinrichtung zur Beförderung des zweiten Behälters derart auszubilden, dass beim Transport des ersten Behälters von der Entnahmeposition in die Ausgabeposition der erste Behälter vom zweiten Behälter gehoben oder geschoben wird. Ein Transport des ersten Behälters durch Heben kommt insbesondere dann infrage, wenn die Ausgabeposition oberhalb der Entnahmeposition liegt. Ein Schieben des ersten Behälters durch den beförderten zweiten Behälter ist dann bevorzugt, wenn sich die Ausgabeposition im Wesentlichen seitlich von der Entnahmeposition befindet. Diese Varianten stellen weitere, ebenfalls besonders einfach und kompakt zu realisierende, Möglichkeiten des Transports des ersten Behälters durch den nachfolgenden zweiten Behälter dar.

Vorzugsweise befindet sich die Ausgabeposition oberhalb der Entnahmeposition. Wie vorstehend erläutert, kann bei dieser Variante ein Transport des ersten Behälters in die Ausgabeposition auf besonders einfache, sichere und kompakte Weise realisiert werden.

Bei einer weiteren bevorzugten Ausgestaltung ist eine Aufnahmeeinrichtung vorgesehen, welche zur Aufnahme mindestens eines Behälters, in welchem sich Wertdokumente befinden, in einer Aufnahmeposition, in welcher der mindestens eine Behälter bereitgestellt werden kann, ausgebildet ist. Eine Bereitstellung der Behälter erfolgt vorzugsweise durch eine Bedienperson, welche den oder die Behälter auf oder in die Aufnahmeeinrichtung stellt. Falls sich bereits ein Behälter in der Aufnahmeposition in der Aufnahmeeinrichtung befindet, werden weitere Behälter vorzugsweise einfach auf diese Behälter gestapelt, so dass in der Aufnahmeeinrichtung ein aus zwei oder mehreren Behältern zusammengesetzter Behälterstapel aufgenommen ist. Durch die vorstehend bereits beschriebene Gestaltung der Unterseite und des oberen Randes der Behälter kann ein besonders sicheres Stapeln der Behälter erreicht werden.

Bei einer weiteren besonders bevorzugten Ausführung weist das Eingabemodul ein, vorzugsweise im Wesentlichen geschlossenes Gehäuse auf, das vorzugsweise lediglich Öffnungen aufweist, die für eine Aufnahme und Entnahme von gefüllten bzw. geleerten Behältern sowie für die Eingabe von Wertdokumenten in ein Eingabefach der Wertdokumentbearbeitungsvorrichtung vorgesehen sind. Insbesondere weist das Gehäuse auf: eine Aufnahmeöffnung, an welcher die Aufnahmeeinrichtung vorgesehen ist und/ oder eine Entnahmeöffnung, an welcher die Entnahmeeinrichtung vorgesehen ist, so dass aus dem in der Entnahmeposition befindlichen Behälter, beispielsweise mittels eines Greifers, entnommene Wertdokumente durch die Entnahmeöffnung hindurch einer Wertdokumentbearbeitungsvorrichtung zugeführt werden können, und/oder eine Ausgabeöffnung, an welcher die Ausgabeeinrichtung vorgesehen ist. Die Entnahmeöffnung befindet sich auf einer der Wertdokumentbearbeitungsvorrichtung zugewandten Gehäuseseite des Eingabemoduls. Vorzugsweise finden die Beförderung der Behälter und die Entnahme von Wertdokumenten aus den Behältern im Inneren des Gehäuses statt und sind dadurch für eine Bedienperson unzugänglich, was die Sicherheit sowohl gegenüber einem unerlaubten oder unerwünschten manuellen Zugriff als auch im Hinblick auf die Verletzungsgefahr, beispielsweise durch den Greifer bei der Entnahme der Wertdokumente, erhöht.

Vorzugsweise weist das Entnahmemodul eine Ausrichtungseinrichtung zum Ausrichten von in einem Behälter befindlichen Wertdokumenten auf. Die Wertdokumente werden hierbei vorzugsweise jeweils mit einer oder beiden Wertdokumentkanten (Längskante bzw. Querkante) an einer bzw. zwei Wandflächen des Behälters ausgerichtet, wie z.B. an einer Seitenwand und/ oder Bodenwand, indem der Behälter in eine geeignete Ausrichtbewegung versetzt wird. Dadurch wird auf einfache und zuverlässige Weise erreicht, dass die aus dem anschließend in der Entnahmeposition befindlichen Behälter zu entnehmenden Wertdokumente bereits ausgerichtet sind und nach ihrer Entnahme aus dem Behälter direkt - d.h. ohne erst noch ausgerichtet werden zu müssen - in das Eingabefach der Wertdokumentbearbeitungsvorrichtung eingegeben werden können.

Vorzugsweise ist die Ausrichtungseinrichtung dazu ausgelegt, den Behälter in eine Oszillations- oder Rüttelbewegung zu versetzen, bei welcher der Behälter abwechselnd in einer ersten Richtung und in einer der ersten Richtung entgegengesetzten zweiten Richtung bewegt wird, wobei die Geschwindigkeit der Bewegung des Behälters in der ersten Richtung bis zum Zeitpunkt der Umkehrung der Richtung zunimmt und der Betrag der Geschwindigkeit der Bewegung des Behälters in der zweiten Richtung nach dem Zeitpunkt der Umkehrung der Richtung abnimmt. Beispielsweise weist die Ausrichtungseinrichtung zu diesem Zweck einen in Drehung versetzbaren Drehzylinder auf, durch welchen der um einen vorgegebenen Winkel, z.B. zwischen etwa 10° und 20°, gegen die Horizontale geneigte Behälter in eine parallel zur Unterseite des Behälters, d.h. parallel zum Neigungswinkel, gerichtete Rüttelbewegung versetzt wird. Ferner kann für den Drehzylinder ein Anschlag vorgesehen sein, an welchem sich Richtung und Geschwindigkeit der Rüttelbewegung ruckartig umkehren, so dass die Kanten der im Behälter befindlichen Wertdokumente aufgrund der Massenträgheit der Wertdokumente an der, in Bezug auf die geneigte Stellung des Behälters, unteren Behälterwand ausgerichtet werden. Insgesamt wird hierdurch ein einfach und kompakt zu realisierendes und zuverlässiges Ausrichten der Wertdokumente ermöglicht.

Es ist ferner besonders bevorzugt, dass sich die Ausrichtungseinrichtung unterhalb der Entnahmeposition befindet. Vorzugsweise befindet sich ferner die Ausgabeposition oberhalb der Entnahmeposition. Alternativ oder zusätzlich kann das Eingabemodul eine Beförderungseinheit aufweisen zur Beförderung des nachfolgenden zweiten Behälters derart, dass der zweite Behälter in einer geradlinigen Bewegung, insbesondere in vertikaler Richtung, von der Ausrichtungseinrichtung zur Entnahmeposition und/ oder von der Entnahmeposition in Richtung der Ausgabeposition und wieder zur Entnahmeposition zurück befördert wird. Durch eine oder mehrere der vorstehend benannten Maßnahmen ist es möglich, einen im Bereich der Ausrichtungseinrichtung befindlichen nachfolgenden zweiten Behälter nach der Ausrichtung der darin befindlichen Wertdokumente durch lediglich eine Beförderungseinheit, beispielsweise einen Lift, von der Ausrichtungseinrichtung zu dem in der Entnahmeposition befindlichen ersten Behälter zu befördern und Letzteren in erfindungsgemäßer Weise in die vorzugsweise oberhalb der Entnahmeposition liegende Ausgabeposition zu transportieren. Der Aufbau des Eingabemoduls lässt sich dadurch besonders einfach und kompakt realisieren.

Es ist ferner bevorzugt, dass das Eingabemodul fahrbar ausgebildet ist, um insbesondere an eine Wertdokumentbearbeitungsvorrichtung herangefahren werden zu können. Beispielsweise ist das Eingabemodul mit Rädern oder Rollen versehen, auf welchen dieses gefahren werden kann. Das Eingabemodul wird hierbei im einfachsten Fall von einer Bedienperson geschoben, es kann aber auch ein Motorantrieb für die Räder bzw. Rollen vorgesehen sein. Das Eingabemodul und die Wertdokumentbearbeitungsvorrichtung können ferner so ausgestaltet sein, die diese temporär oder permanent miteinander gekoppelt werden können. Das Eingabemodul wird dabei so an die Wertdokumentbearbeitungsvorrichtung herangefahren, dass die Entnahmeöffnung des Gehäuses des Eingabemoduls zumindest temporär, insbesondere während des Zuführens der aus einem Behälter entnommenen Wertdokumente zur Wertdokumentbearbeitungsvorrichtung, im Bereich des Eingabefachs der Wertdokumentbearbeitungsvorrichtung liegt.

Weitere Merkmale, Vorteile und Anwendungsmöglichkeiten der vorliegenden Erfindung ergeben sich aus der nachfolgenden Beschreibung in Zusammenhang mit den Figuren. Es zeigen:
- Fig. 1: einen schematischen Aufbau eines Entnahmemoduls zusammen mit einer Wertdokumentbearbeitungsvorrichtung;
- Fig. 2: einen zeitlichen Verlauf des von einem Behälter in der Ausrichtungseinrichtung zurückgelegten Weges (oberer Teil der Figur) sowie der entsprechenden Geschwindigkeit des Behälters (unterer Teil der Figur);
- Fig. 3: einen schematischen Aufbau eines Entnahmemoduls zu einem ersten Zeitpunkt;
- Fig. 4: einen schematischen Aufbau eines Entnahmemoduls zu einem zweiten Zeitpunkt;
- Fig. 5: einen schematischen Aufbau eines Entnahmemoduls zu einem dritten Zeitpunkt;
- Fig. 6: einen schematischen Aufbau eines Entnahmemoduls zu einem vierten Zeitpunkt; und
- Fig. 7: einen schematischen Aufbau eines Entnahmemoduls zu einem fünften Zeitpunkt;
- Fig. 8a-c: Beispiel für einen mechanischen Verdrehschutz des Behälters in Bezug auf die Aufnahmeöffnung.

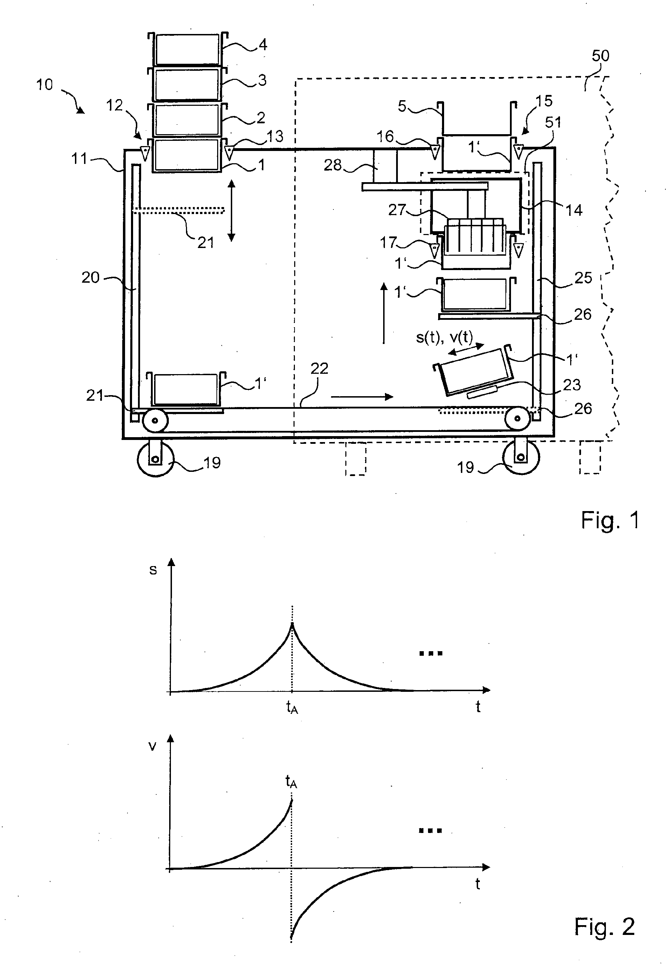

Fig. 1 zeigt einen schematischen Aufbau eines Entnahmemoduls 10 zusammen mit einer Wertdokumentbearbeitungsvorrichtung 50.

Das Entnahmemodul 10 weist ein vorzugsweise im Wesentlichen geschlossenes Gehäuse 11 auf, das fahrbar ausgestaltet ist, um an die Wertdokumentbearbeitungsvorrichtung 50 herangefahren werden zu können. Dazu kann das Entnahmemodul mit Rädern oder Rollen 19 versehen sein. Im einfachsten Fall kann das Entnahmemodul 10 von einer Bedienperson zur Wertdokumentbearbeitungsvorrichtung 50 geschoben werden. Alternativ oder zusätzlich ist es aber auch möglich, das Entnahmemodul 10 mit einem geeigneten Antrieb, beispielsweise einem Elektromotor auszustatten, welcher die Räder des Entnahmemoduls 10 antreibt und somit das Fahren erleichtert. Alternativ oder zusätzlich kann die Wertdokumentbearbeitungsvorrichtung 50 das Eingabemodul 10 auch zu sich heranziehen.

Im Bereich einer Aufnahmeöffnung 12 im Gehäuse 11 ist eine Aufnahmeeinrichtung 13 vorgesehen, an welcher ein oder mehrere mit Banknoten, insbesondere Banknotenstapeln, gefüllte Behälter 1 bis 4 aufgenommen werden können. Im dargestellten Beispiel weist die Aufnahmeeinrichtung 13 zwei Halteelemente auf, auf welchen ein oberer umlaufender Rand des untersten Behälters 1 aufliegt. Die Aufnahmeeinrichtung 13 und/oder die Behälter 1 bis 4 ist bzw. sind hierbei vorzugsweise so ausgestaltet, dass auf einen von der Aufnahmeeinrichtung 13 aufgenommenen Behälter 1 weitere Behälter 2, 3, 4 (oder noch mehr) gestapelt werden können.

Die Aufnahmeeinrichtung 13 und/ oder die Aufnahmeöffnung 12 des Eingabemoduls ist bevorzugt derart ausgebildet ist, dass die Orientierung des Behälters 1 in der Aufnahmeposition vorbestimmt und reproduzierbar ist. Zu diesem Zweck kann die Aufnahmeeinrichtung 13 und/ oder die Aufnahmeöffnung z.B. einen mechanischen Verdrehschutz aufweisen. Der Behälter kann dann nur in der richtigen Orientierung in der Aufnahmeöffnung 12 aufgenommen werden. Damit wird sichergestellt, dass die Entleerung der Aufbewahrungsbereiche des Behälters in einer bestimmten Reihenfolge erfolgt und damit die richtige Zuordnung von Einzahlungen und/oder zugeordneten Headerkarten oder Trennkarten eingehalten wird.

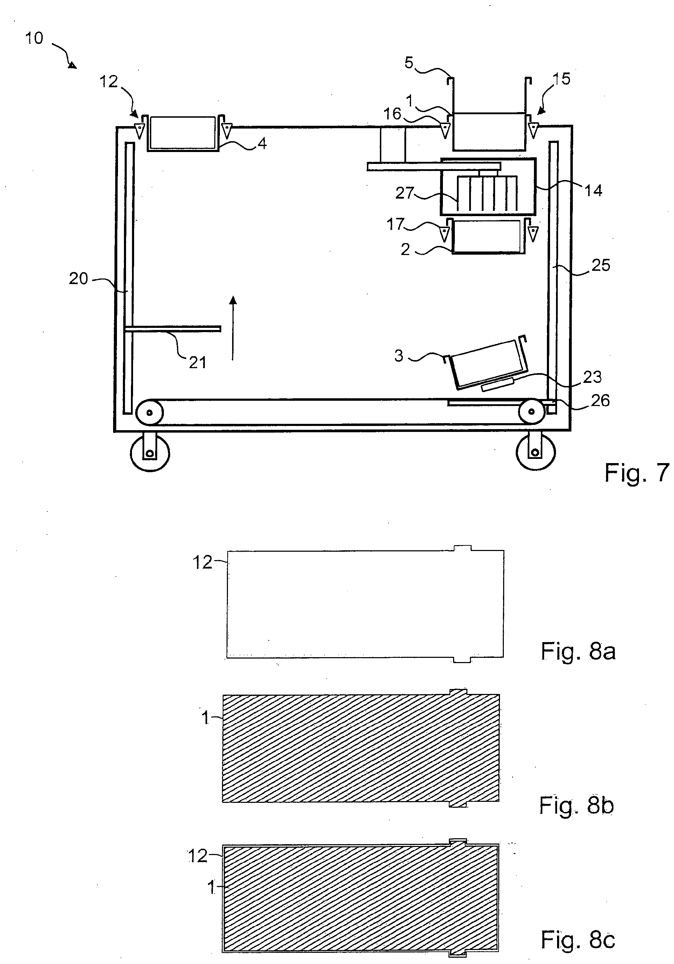

Der Verdrehschutz wird z.B. durch eine asymmetrische Ausbildung der Aufnahmeöffnung 12 des Gehäuses 11 und eine entsprechende Asymmetrie der Behälters realisiert, vgl. Fig. 8a-c. Zum Beispiel weist der Behälter 1 nur an der rechten Behälterseite zwei Vorsprünge auf und nicht an der linken Behälterseite, vgl. Fig. 8b. Die Aufnahmeöffnung 12 hat entsprechend auch nur der rechten Seite Aussparungen, vgl. Fig. 8a, so dass der Behälter 1 nur in der in Figur 8b gezeigten Orientierung in der Aufnahmeöffnung 12 aufgenommen werden kann, vgl. Fig. 8c. Als mechanischer Verdrehschutz können aber auch Sicherungshaken verwendet werden, die nur an einer von zwei gegenüberliegenden Seiten der Aufnahmeöffnung 12 vorhanden sind und die mittels eines Vorsprungs des Behälters entsichert werden, der nur an einer von zwei gegenüberliegenden Seiten des Behälters vorhanden ist.

Alternativ oder zusätzlich zum mechanischen Verdrehschutz kann an oder benachbart zur Aufnahmeeinrichtung 13 auch mindestens einen Sensor vorhanden sein, um die Orientierung des in der Aufnahmeposition aufgenommenen Behälters zu detektieren. Falls eine falsche Orientierung detektiert wird, wird eine Warnung ausgegeben.

Im Inneren des Gehäuses 11 ist eine erste Beförderungseinheit 20 vorgesehen, durch welche der jeweils unterste Behälter 1 des aus den Behältern 1 bis 4 gebildeten Behälterstapels von der Aufnahmeeinrichtung 13 in vertikaler Richtung nach unten entnommen werden kann. Zu diesem Zweck kann die erste Beförderungseinheit 20 beispielsweise als Lift ausgestaltet sein, durch welchen ein Auflageelement 21 vertikal verfahren werden kann. Die erste Beförderungseinheit 20 kann vorzugsweise einen Spindelantrieb oder einen Zahnriemenantrieb aufweisen, durch welchen das Auflageelement 21 in vertikaler Richtung verfahren wird.

Das Auflageelement 21 wird zunächst in vertikaler Richtung nach oben befördert, so dass der unterste Behälter 1 etwas angehoben wird, woraufhin die Aufnahmeeinrichtung 13 den Behälter 1 freigibt, beispielsweise indem die in der Figur nur schematisch angedeuteten Halteelemente beispielsweise horizontal verfahren oder weggedreht werden. Nach einer anschließenden Bewegung des Auflageelements 21 in vertikaler Richtung nach unten wird dann der unterste Behälter 1 aus der Aufnahmeeinrichtung 13 entnommen und in vertikaler Richtung abwärts transportiert, bis der entnommene Behälter (im Folgenden als Behälter 1' bezeichnet) auf einer zweiten Beförderungseinheit 22, welche im dargestellten Beispiel durch einen oder mehrere Förderriemen realisiert ist, zu liegen kommt. Die Halteelemente 13 schließen dann nach dem abtransportierten Behälter 1' wieder, so dass der nächste Behälter wieder zurückgehalten wird.

Im dargestellten Beispiel ist das Auflageelement 21 gabelartig ausgestaltet, so dass dieses zwischen den einzelnen Förderriemen der zweiten Beförderungseinheit 22 abgesenkt werden kann und dadurch der Behälter 1' zuverlässig auf den Förderriemen abgestellt werden kann.

Der Behälter 1' wird dann durch die zweite Beförderungseinheit 22 zu einer, im dargestellten Beispiel nur stark schematisch wiedergegebenen, Ausrichtungseinrichtung 23 befördert, welche derart ausgestaltet ist, dass der Behälter 1' um einen vorgegebenen Winkel, vorzugsweise um etwa 15°, gegenüber der Horizontalen geneigt wird und anschließend in eine Rüttel- oder Oszillationsbewegung versetzt wird, bei welcher dieser in einer Richtung parallel zum vorgegebenen Neigungswinkel gegenüber der Horizontalen vorwärts und rückwärts bewegt wird (siehe Doppelpfeil), wodurch die im Behälter 1' befindlichen Banknoten aufgrund ihrer Massenträgheit an der unten Behälterwand des Behälters 1' ausgerichtet werden.

Die Ausrichtungseinrichtung 23 kann beispielsweise einen in Drehung versetzbaren Drehzylinder aufweisen, dessen Bewegungsrichtung sich nach einem Kontakt mit einem Anschlag ruckartig umkehrt. Die Ausrichtungseinrichtung 23 bzw. der Drehzylinder ist dabei vorzugsweise so ausgestaltet, dass die Geschwindigkeit der Bewegung des Behälters 1' zum Anschlag hin zunimmt und nach einer Richtungsumkehr am Anschlag wieder abnimmt. Dies hat zur Folge, dass die im Behälter 1' befindlichen Banknoten mit besonders hoher Zuverlässigkeit an der unteren Seitenwand des Behälters 1' ausgerichtet werden.

Fig. 2 zeigt beispielhaft den zeitlichen Verlauf des vom Behälter 1' in der Ausrichtungseinrichtung 23 zurückgelegten Weges s (oberer Teil der Figur).

Wie anhand des nichtlinearen Verlaufs des Weges s über der Zeit t bis zum Zeitpunkt t_{A}, in welchem der Anschlag erreicht wird, sowie in der sich daran anschließenden umgekehrten Bewegung des Behälters 1' zu erkennen ist, ist die Geschwindigkeit während der Rüttelbewegung nicht konstant, sondern nimmt einerseits bis zur Kontaktierung des Anschlags hin allmählich zu und danach wieder allmählich ab. Dies verdeutlicht der entsprechende zeitliche Verlauf der Geschwindigkeit v des Behälters 1' während der Rüttelbewegung (unterer Teil der Figur), aus dem ersichtlich ist, dass die Geschwindigkeit v des Behälters 1' bis zum Zeitpunkt t_{A} des Erreichen des Anschlags kontinuierlich ansteigt und nach einer Richtungsumkehr (betragsmäßig) wieder kontinuierlich abnimmt, bis schließlich ein neuer Zyklus der oszillierenden Rüttelbewegung von neuem beginnt.

Der zeitliche Verlauf des Weges s sowie der Geschwindigkeit v des Behälters 1' ist in Fig. 2 beispielhaft angedeutet. Grundsätzlich ist es aber auch denkbar, andere zeitliche Verläufe vorzusehen, beispielsweise einen in etwa linearen Anstieg der Geschwindigkeit v über der Zeit t bis zum Zeitpunkt t_{A} des Erreichens des Anschlags bzw. ein entsprechender linearer Abfall der Geschwindigkeit v nach Erreichen des Anschlags.

Wie anhand von Fig. 1 weiter veranschaulicht ist, wird der Behälter 1' nach dem Ausrichten der im Behälter 1' befindlichen Banknoten mittels einer dritten Beförderungseinheit 25, die vorzugsweise ebenfalls als Lift mit einem Auflageelement 26 ausgestaltet sein und einen Spindel- oder Zahnriemenantrieb aufweisen kann, in vertikaler Richtung nach oben befördert. Vorzugsweise kann in diesem Falle das Auflageelement 26 zwischen den Förderriemen der zweiten Beförderungseinheit 22 abtauchen und solange in Wartestellung verharren, bis der Vorgang des Ausrichtens abgeschlossen ist, und erst dann den Behälter 1' von der Ausrichtungseinrichtung 23 abheben und weiter nach oben befördern, bis der Behälter 1' schließlich von Halteelementen 17 in einer Entnahmeposition aufgenommen wird, in welcher die im Behälter 1' befindlichen Banknoten durch einen Greifer 27 stapelweise aus dem Behälter 1' entnommen und durch eine im Gehäuse 11 vorgesehene Entnahmeöffnung 14 hindurch in ein an der Banknotenbearbeitungsvorrichtung 50 vorgesehenes Eingabefach 51 eingegeben werden können. Dort werden die Banknoten des jeweils eingegebenen Banknotenstapels vereinzelt und einer Bearbeitung, insbesondere einer Prüfung, Zählung, Sortierung oder Vernichtung zugeführt.

Vorzugsweise ist der Greifer 27 durch eine hier nur schematisch wiedergegebene Greifermechanik 28 derart bewegbar, dass er zur Entnahme von Banknoten aus dem Behälter 1' und/oder zur Eingabe der entnommenen Banknoten in das Eingabefach 51 der Banknotenbearbeitungsvorrichtung 50 in den Bereich der Entnahmeöffnung 14 eingefahren und nach Beendigung der Entnahme bzw. Eingabe wieder aus diesem Bereich herausgefahren werden kann.

Um feststellen zu können, an welchen Positionen im Behälter 1' sich Trennelemente zur Trennung der einzelnen Banknotenstapel befinden, sind vorzugsweise mechanische und/ oder optische Sensoren und/oder eine Kamera vorgesehen. Bei solchen Trennelementen handelt es sich z.B. um im jeweiligen Behälter variabel positionierbare Wände zur physikalischen Trennung der einzelnen Banknotenstapel. Anhand der hierbei gewonnenen Positionsinformationen kann der Greifer 27 die einzelnen, voneinander separierten Banknotenstapel entnehmen und stapelweise in das Eingabefach 51 der Banknotenbearbeitungsvorrichtung 50 eingeben.

Vorzugsweise kann eine drahtgebundene oder drahtlose Kommunikationsverbindung vorgesehen sein, durch welche zwischen dem Eingabemodul 10 und der Banknotenbearbeitungsvorrichtung 50 Daten ausgetauscht werden können, beispielsweise über die jeweils in das Eingabefach 51 eingegebenen Wertdokumente. Die Banknotenbearbeitungsvorrichtung 50 kann umgekehrt auch dem Eingabemodul 10 mitteilen, ob bzw. wann im Eingabefach 51, aus dem die eingegebenen Banknoten laufend durch einen Vereinzeler abgezogen werden, wieder Platz ist für einen nächsten Banknotenstapel.

Der Behälter kann einen Datenträger aufweisen, z.B. einen NFC-Chip, aus dem in der Entnahmeposition Informationen über die in dem Behälter enthaltenen Wertdokumente ausgelesen werden, z.B. zu welcher Einzahlung die Wertdokumente des jeweiligen Behälters gehören und ggf. auch zu welchem Einzahler. Diese Informationen können über die Kommunikationsverbindung zur Banknotenbearbeitungsvorrichtung 50 übermittelt werden, und dort für die Abrechnung der Einzahlungen verwendet werden. Die Information zu den Wertdokumenten kann in dem Datenträger auch Aufbewahrungsbereich-bezogen vorhanden sein, d.h. für jeden zwischen jeweils zwei Trennelementen befindlichen Wertdokumentstapel individuell vorhanden sein, und entsprechend Aufbewahrungsbereich-bezogen an die Banknotenbearbeitungsvorrichtung 50 übermittelt werden.

Wenn der in der Entnahmeposition befindliche Behälter 1' entleert ist, wird dieser zu einer im Bereich einer Ausgabeöffnung 15 des Gehäuses 11 vorgesehenen Ausgabeeinrichtung 16 transportiert, durch welche dieser in einer Ausgabeposition gehalten wird, in der er schließlich wieder von einer Bedienperson vom Eingabemodul 10 entfernt werden kann.

Die Ausgabeeinrichtung 16 kann - ähnlich wie die Aufnahmeeinrichtung 13 - vorzugsweise nicht nur einen, sondern mehrere leere Behälter aufnehmen, wobei der jeweils unterste Behälter, im gezeigten Beispiel der Behälter 1', mit seinem oberen Rand an Halteelementen der Ausgabeeinrichtung 16 aufliegt, während ein oder mehrere weitere Behälter 5 auf den in der Ausgabeeinrichtung 16 befindlichen untersten Behälter 1' gestapelt werden können.

Insgesamt werden also die von einer Bedienperson in die Aufnahmeöffnung 12 des Eingabemoduls 10 eingegebenen gefüllten Behälter 1 bis 4 innerhalb des Eingabemoduls 10 entlang eines U-förmigen Transportweges befördert, um nach der Entleerung wieder von einer Bedienperson aus der Ausgabeöffnung 15 entnommen werden zu können.

Da gleichzeitig mehrere Behälter in die Aufnahmeöffnung 12 eingegeben, im Inneren des Eingabemoduls 10 befördert und in der Ausgabeöffnung 15 aufgenommen, insbesondere gestapelt, werden können, hat das Eingabemodul die Funktion eines Pufferspeichers für die Behälter.

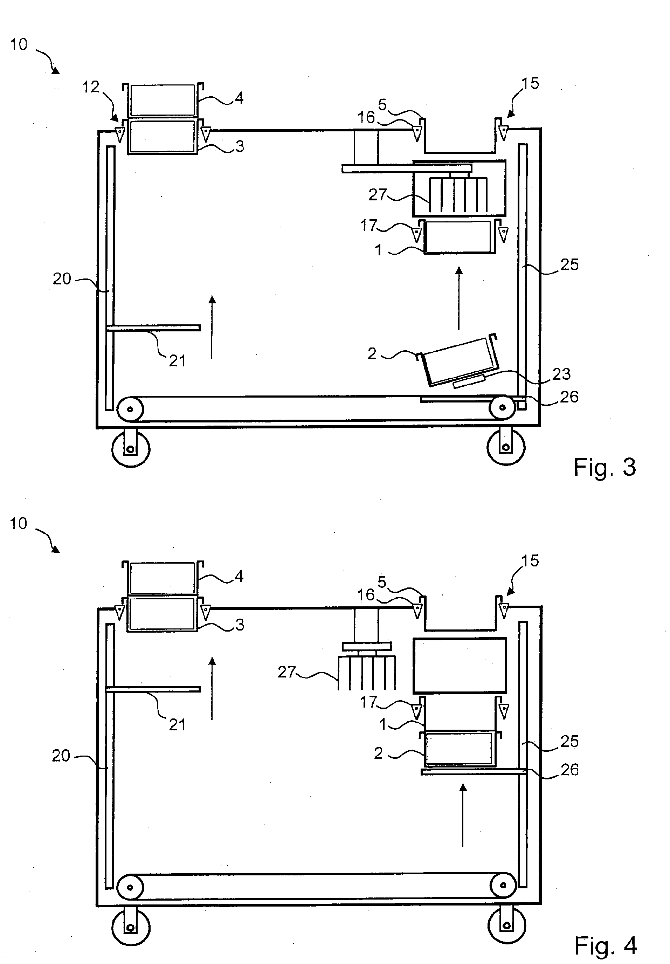

Im Folgenden wird der Transport eines, insbesondere entleerten, Behälters von der Entnahmeposition zur Ausgabeposition unter Bezugnahme auf die Figuren 3 bis 7 näher erläutert.

Fig. 3 zeigt einen schematischen Aufbau des Entnahmemoduls 10 zu einem ersten Zeitpunkt, in welchem ein mit Banknoten gefüllter erster Behälter 1 durch die Halteelemente 17 in der Entnahmeposition gehalten wird und für eine stapelweise Entnahme der im ersten Behälter 1 befindlichen Banknoten mittels des Greifers 27 bereitsteht.

Ein nachfolgender zweiter Behälter 2 befindet sich zu diesem Zeitpunkt bereits in der unterhalb der Entnahmeposition angeordneten Ausrichtungseinrichtung 23, in welcher die im zweiten Behälter 2 befindlichen Banknoten in der vorstehend näher beschriebenen Weise ausgerichtet werden.

Das von der dritten Beförderungseinheit 25 bewegte Auflageelement 26 befindet sich zu diesem Zeitpunkt unterhalb des zweiten Behälters 2 und kann diesen, nach Beendigung des Ausrichtvorgangs, in vertikaler Richtung nach oben befördern.

Zu dem hier dargestellten ersten Zeitpunkt ist es ferner möglich, dass das von der ersten Beförderungseinheit 20 angetriebene Auflageelement 21 bereits in vertikaler Richtung nach oben befördert wird, um einen weiteren Behälter 3 aus der Aufnahmeöffnung 12 zu entnehmen.

Fig. 4 zeigt das Entnahmemodul 10 zu einem zweiten, späteren Zeitpunkt, in welchem die im ersten Behälter 1 befindlichen Banknoten bereits durch den Greifer 27 aus dem ersten Behälter 1 entnommen und durch die Entnahmeöffnung 14 in ein Eingabefach einer Banknotenbearbeitungsvorrichtung eingelegt worden sind. Der noch in Entnahmeposition befindliche erste Behälter 1 ist daher leer.

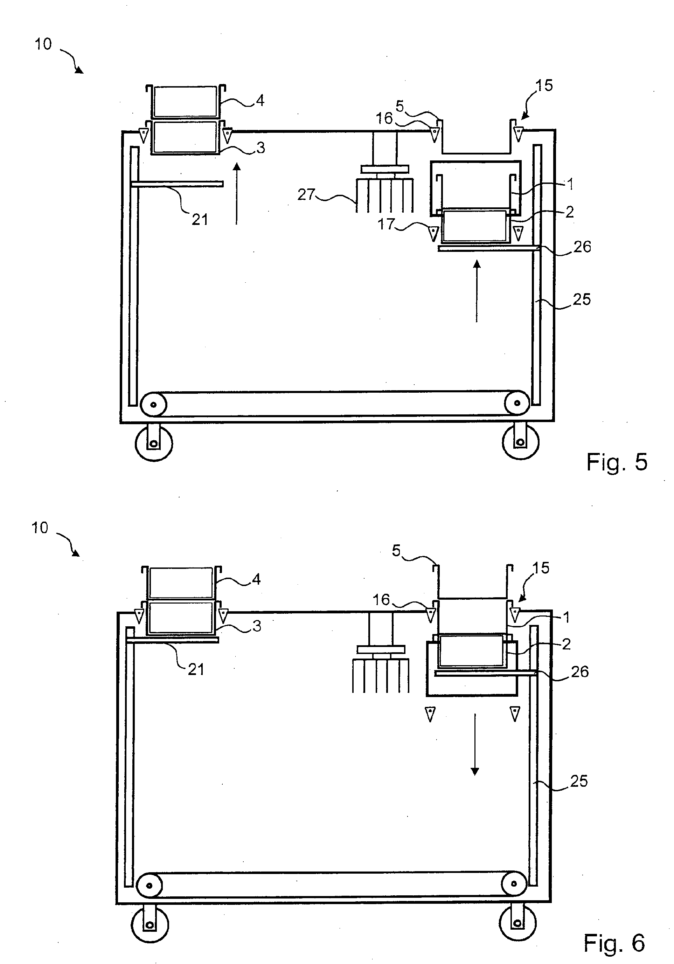

Der durch die dritte Beförderungseinheit 25 vertikal nach oben beförderte und auf dem Auflageelement 26 liegende zweite Behälter 2 kontaktiert zu diesem Zeitpunkt mit seinem oberen Rand die Unterseite des ersten Behälters 1. Bei einer Fortsetzung der vertikalen Bewegung nach oben wird der erste Behälter 1 dann von dem zweiten Behälter 2 mitgenommen, aus seiner ursprünglichen Entnahmeposition gehoben und in Richtung der Ausgabeposition im Bereich der Ausgabeöffnung 15 transportiert. Dies wird in Fig. 5 anhand des dort dargestellten dritten Zeitpunkts veranschaulicht, in dem der den ersten Behälter 1 nach oben transportierende zweite Behälter 2 bereits die Entnahmeposition auf der Höhe der Halteelemente 17 passiert hat.

Durch eine weitere Fortsetzung der Beförderung des zweiten Behälters 2 nach oben schiebt dieser schließlich den ersten Behälter 1 in die im Bereich der Ausgabeöffnung 15 vorgesehenen Halteelemente 16 ein und wird von diesen in der in Fig. 6 dargestellten Ausgabeposition aufgenommen und gehalten. Beim Einfahren des ersten Behälters 1 in die Ausgabeöffnung 15 wird ein dort bereits aufgenommener weiterer Behälter 5 nach oben hin verschoben und bildet mit dem ersten Behälter 1 einen Behälterstapel im Bereich der Ausgabeöffnung 15.

Der noch mit Banknoten gefüllte zweite Behälter 2 wird nun mittels der dritten Bewegungseinheit 25 in vertikaler Richtung nach unten befördert und erreicht dabei wieder die Halteelemente 17 und wird durch diese schließlich in einer Entnahmeposition gehalten, in welcher die im zweiten Behälter 2 befindlichen Banknoten mittels des wieder in den Eingabebereich eingefahrenen Greifers 27 entnommen und, vorzugsweise stapelweise, durch die Eingabeöffnung 14 hindurch in ein Eingabefach einer Banknotenbearbeitungsvorrichtung eingelegt werden können, bis der zweite Behälter 2 ebenfalls entleert ist. Die Situation zu Beginn des Entnahmevorgangs zu einem fünften Zeitpunkt ist in Fig. 7 veranschaulicht.

Zu diesem Zeitpunkt befindet sich ein zwischenzeitlich aus der Eingabeöffnung 12 entnommener dritter Behälter 3 bereits in der Ausrichtungseinrichtung 23, so dass nach dem Entleeren des in der Entnahmeposition befindlichen zweiten Behälters 2 und dem Abschluss des Ausrichtvorgangs der im dritten Behälter befindlichen Banknoten der vorstehend anhand des ersten und zweiten Behälters 1 und 2 beschriebene Ablauf nun von neuem mit dem zweiten und dritten Behälter 2 und 3 in entsprechender Weise vollzogen werden kann.

## Patentansprüche

1. Eingabemodul (10) zum Zuführen von Wertdokumenten, insbesondere Banknoten, zu mindestens einer Wertdokumentbearbeitungsvorrichtung (50) mit:
- einer Aufnahmeeinrichtung (13) zur Aufnahme mindestens eines Behälters (1), in welchem sich Wertdokumente befinden, in einer Aufnahmeposition, in welcher der mindestens eine Behälter bereitgestellt werden kann, wobei die Aufnahmeeinrichtung (13) und/oder eine Aufnahmeöffnung (12) des Eingabemoduls (10) derart ausgebildet ist, dass die Orientierung des Behälters (1) in der Aufnahmeposition vorbestimmt und reproduzierbar ist, wobei die Aufnahmeeinrichtung (13) und/oder die Aufnahmeöffnung (12) einen mechanischen Verdrehschutz aufweisen, aufgrund der der Behälter (1) nur in genau einer Orientierung in der Aufnahmeposition aufgenommen werden kann und wobei der Behälter eine entsprechende Asymmetrie aufweist, oder das Eingabemodul (10) mindestens einen Sensor hat, um die Orientierung des in der Aufnahmeposition aufgenommenen Behälters zu detektieren, wobei insbesondere eine Warnung ausgegeben wird, falls eine falsche Orientierung detektiert wird,
- einer Entnahmeeinrichtung (27) zur Entnahme von Wertdokumenten aus einem in einer Entnahmeposition befindlichen Behälter (1) und zum Zuführen der entnommenen Wertdokumente zu einer Wertdokumentbearbeitungsvorrichtung (50),
- einer Ausgabeeinrichtung (16) zur Aufnahme mindestens eines Behälters (1) in einer Ausgabeposition, in welcher der Behälter (1) entnommen werden kann, und
- einer Beförderungseinrichtung (25, 26), die dazu ausgebildet ist, einen in der Aufnahmeposition befindlichen Behälter aus der Aufnahmeposition in die Entnahmeposition zu befördern, in der Wertdokumente durch die Entnahmeeinrichtung aus dem Behälter entnommen werden können, und die dazu ausgebildet ist, einen in der Entnahmeposition befindlichen Behälter aus der Entnahmeposition in die Ausgabeposition zu befördern, in welcher der Behälter (1) von der Ausgabeeinrichtung (16) aufgenommen werden kann.

2. Eingabemodul (10) nach Anspruch 1, wobei der in der Entnahmeposition befindliche Behälter (1), aus dem die Wertdokumente entnommen und zu einer Wertdokumentbearbeitungsvorrichtung (50) zugeführt werden, ein erster Behälter ist und dass die Beförderungseinrichtung (25, 26) dazu ausgebildet, einen zweiten Behälter (2) derart zu befördern, dass
- der in der Entnahmeposition befindliche erste Behälter (1) durch den von der Beförderungseinrichtung (25, 26) beförderten zweiten Behälter (2) aus der Entnahmeposition in die Ausgabeposition, in welcher der erste Behälter (1) von der Ausgabeeinrichtung (16) aufgenommen werden kann, transportiert wird, und
- der zweite Behälter (2) anschließend in die Entnahmeposition befördert wird.

3. Eingabemodul (10) nach Anspruch 2, wobei die Beförderungseinrichtung (25, 26) zur Beförderung des zweiten Behälters (2) derart ausgebildet ist, dass beim Transport des ersten Behälters (1) von der Entnahmeposition in die Ausgabeposition der zweite Behälter (2) eine Seite, insbesondere die Unterseite, des ersten Behälters (1) berührt.

4. Eingabemodul (10) nach Anspruch 2 oder 3, wobei die Beförderungseinrichtung (25, 26) zur Beförderung des zweiten Behälters (2) derart ausgebildet ist, dass beim Transport des ersten Behälters (1) von der Entnahmeposition in die Ausgabeposition der zweite Behälter (2) am ersten Behälter (1) andockt und/ oder an den ersten Behälter (1) ankoppelt.

5. Eingabemodul (10) nach einem der Ansprüche 2 bis 4, wobei die Beförderungseinrichtung (25, 26) zur Beförderung des zweiten Behälters (2) derart ausgebildet ist, dass beim Transport des ersten Behälters (1) von der Entnahmeposition in die Ausgabeposition der erste Behälter (1) vom zweiten Behälter (2) gehoben oder geschoben wird.

6. Eingabemodul (10) nach einem der vorhergehenden Ansprüche mit einem Gehäuse (11), welches aufweist:
- eine Aufnahmeöffnung (12), an welcher die Aufnahmeeinrichtung (13) vorgesehen ist,
- eine Entnahmeöffnung (14), an welcher die Entnahmeeinrichtung (27) vorgesehen ist, so dass aus dem in der Entnahmeposition befindlichen Behälter (1) entnommene Wertdokumente durch die Entnahmeöffnung (14) hindurch einer Wertdokumentbearbeitungsvorrichtung (50) zugeführt werden können, und
- eine Ausgabeöffnung (15), an welcher die Ausgabeeinrichtung (16) vorgesehen ist.

7. Eingabemodul (10) nach einem der vorangehenden Ansprüche mit einer Ausrichtungseinrichtung (23) zum Ausrichten von in einem Behälter (1' 2, 3) befindlichen Wertdokumenten.

8. Eingabemodul (10) nach Anspruch 7, wobei die Ausrichtungseinrichtung (23) dazu ausgelegt ist, den Behälter (1', 2, 3) in eine Oszillationsbewegung zu versetzen, bei welcher der Behälter (1', 2, 3) abwechselnd in einer ersten Richtung und in einer der ersten Richtung entgegengesetzten zweiten Richtung bewegt wird, wobei die Geschwindigkeit (v) der Bewegung des Behälters (1', 2, 3) in der ersten Richtung bis zum Zeitpunkt (t_{A}) der Umkehrung der Richtung zunimmt und die Geschwindigkeit (v) der Bewegung des Behälters (1', 2, 3) in der zweiten Richtung nach dem Zeitpunkt (t_{A}) der Umkehrung der Richtung abnimmt.

9. Eingabemodul (10) nach einem der vorangehenden Ansprüche mit einer Beförderungseinheit (25, 26) zu einer Beförderung des Behälters (2) derart, dass der Behälter (2) in einer geradlinigen Bewegung, insbesondere in vertikaler Richtung, von der Ausrichtungseinrichtung (23) zur Entnahmeposition und/oder von der Entnahmeposition in Richtung der Ausgabeposition und wieder zur Entnahmeposition zurück befördert wird.

10. Eingabemodul (10) nach einem der vorangehenden Ansprüche, wobei das Eingabemodul (10) fahrbar ausgebildet ist, um insbesondere an eine Wertdokumentbearbeitungsvorrichtung (50) herangefahren werden zu können.

11. System (10, 50) zur Bearbeitung von Wertdokumenten, insbesondere Banknoten, mit einer Wertdokumentbearbeitungsvorrichtung (50) zur Bearbeitung, insbesondere Prüfung und/oder Zählung und/oder Sortierung, von Wertdokumenten und einem Eingabemodul (10) nach einem der vorangehenden Ansprüche.

12. Verfahren zum Zuführen von Wertdokumenten, insbesondere Banknoten, aus einem Eingabemodul (10) zu mindestens einer Wertdokumentbearbeitungsvorrichtung (50) mit folgenden Schritten:
a) Bereitstellen mindestens eines Behälters, in welchem sich Wertdokumente befinden, in einer Aufnahmeposition einer Aufnahmeeinrichtung (13) des Eingabemoduls (10), wobei die Aufnahmeeinrichtung (13) und/oder eine Aufnahmeöffnung (12) des Eingabemoduls (10) derart ausgebildet ist, dass die Orientierung des Behälters (1) in der Aufnahmeposition vorbestimmt und reproduzierbar ist, wobei die Aufnahmeeinrichtung (13) und/oder die Aufnahmeöffnung (12) einen mechanischen Verdrehschutz aufweisen, aufgrund der der Behälter (1) nur in genau einer Orientierung in der Aufnahmeposition aufgenommen werden kann und wobei der Behälter eine entsprechende Asymmetrie aufweist, oder das Eingabemodul (10) mindestens einen Sensor hat, um die Orientierung des in der Aufnahmeposition aufgenommenen Behälters zu detektieren, wobei insbesondere eine Warnung ausgegeben wird, falls eine falsche Orientierung detektiert wird,
b) Befördern des in der Aufnahmeposition befindlichen Behälters aus der Aufnahmeposition in eine Entnahmeposition des Eingabemoduls (10), in der Wertdokumente aus dem Behälter entnommen werden,
c) Entnehmen von Wertdokumenten aus dem in der Entnahmeposition befindlichen Behälter (1) mit Hilfe einer Entnahmeeinrichtung des Eingabemoduls (10),
d) Zuführen der aus dem Behälter entnommenen Wertdokumente zu einer Wertdokumentbearbeitungsvorrichtung (50) mit Hilfe der Entnahmeeinrichtung des Eingabemoduls (10),
e) Befördern des in der Entnahmeposition befindlichen Behälters aus der Entnahmeposition in eine Ausgabeposition, in welcher der Behälter (1) von einer Ausgabeeinrichtung (16) des Eingabemoduls (10) aufgenommen wird,
f) Entnehmen des in der Ausgabeposition befindlichen Behälters.

## Claims

1. Introduction module (10) for feeding value documents, in particular bank notes, to at least one value-document-processing apparatus (50), having:
- a receiving device (13) for receiving at least one container (1), in which value documents are situated, in a receiving position, in which the at least one container can be provided, wherein the receiving device (13) and/or a receiving opening (12) of the introduction module (10) are/is designed in such a way that the orientation of the container (1) in the receiving position is predetermined and reproducible, wherein the receiving device (13) and/or the receiving opening (12) have/has a mechanical rotation-prevention means, on account of which the container (1) can be received in the receiving position only with exactly one orientation, and wherein the container has corresponding asymmetry, or the introduction module (10) has at least one sensor in order to detect the orientation of the container received in the receiving position, wherein in particular a warning is issued if an incorrection orientation is detected,
- a removal device (27) for removing value documents from a container (1) which is in a removal position and for feeding the removed value documents to a value-document-processing apparatus (50),
- a discharge device (16) for receiving at least one container (1) in a discharge position, in which the container (1) can be removed, and
- a conveying device (25, 26) which is configured to convey a container which is in the receiving position from the receiving position into the removal position, in which value documents can be removed from the container by the removal device, and which is configured to convey a container which is in the removal position from the removal position into the discharge position, in which the container (1) can be received by the discharge device (16).

2. Introduction module (10) according to Claim 1, wherein the container (1) in the removal position, from which the value documents are removed and are fed to a value-document-processing apparatus (50), is a first container, and in that the conveying device (25, 26) is configured to convey a second container (2) in such a way that
- the first container (1), in the removal position, is transported by the second container (2), conveyed by the conveying device (25, 26), from the removal position into the discharge position, in which the first container (1) can be received by the discharge device (16), and
- the second container (5) is subsequently conveyed back into the removal position.

3. Introduction module (10) according to Claim 2, wherein the conveying device (25, 26) is configured to convey the second container (2) in such a way that, during the transportation of the first container (1) from the removal position into the discharge position, the second container (2) is in contact with a side, in particular the bottom side, of the first container (1).

4. Introduction module (10) according to Claim 2 or 3, wherein the conveying device (25, 26) is configured to convey the second container (2) in such a way that, during the transportation of the first container (1) from the removal position into the discharge position, the second container (2) docks onto the first container (1) and/or couples to the first container (1).

5. Introduction module (10) according to one of Claims 2 to 4, wherein the conveying device (25, 26) is configured to convey the second container (2) in such a way that, during the transportation of the first container (1) from the removal position into the discharge position, the first container (1) is lifted or pushed by the second container (2).

6. Introduction module (10) according to one of the preceding claims, having a housing (11) which has:
- a receiving opening (12) at which the receiving device (13) is provided,
- a removal opening (14) at which the removal device (27) is provided, such that value documents removed from the container (1) in the removal position can be fed to a value-document-processing apparatus (50) through the removal opening (14), and
- a discharge opening (15) at which the discharge device (16) is provided.

7. Introduction module (10) according to one of the preceding claims, having an alignment device (23) for aligning value documents which are situated in a container (1', 2, 3).

8. Introduction module (10) according to Claim 7, wherein the alignment device (23) is configured to set the container (1', 2, 3) in oscillating motion, during which the container (1', 2, 3) is moved alternately in a first direction and in a second direction, which is opposite to the first direction, wherein the speed (v) of the movement of the container (1', 2, 3) in the first direction increases up to the time (t_{A}) of the reversal in direction, and the speed (v) of the movement of the container (1', 2, 3) in the second direction decreases after the time (t_{A}) of the reversal in direction.

9. Introduction module (10) according to one of the preceding claims, having a conveying unit (25, 26) for conveying the container (2) in such a way that the container (2) is conveyed with a rectilinear movement, in particular in a vertical direction, from the alignment device (23) to the removal position and/or from the removal position in the direction of the discharge position and back to the removal position again.

10. Introduction module (10) according to one of the preceding claims, wherein the introduction module (10) is designed to be movable in order to be able to be brought in particular to a value-document-processing apparatus (50).

11. System (10, 50) for processing value documents, in particular bank notes, having a value-document-processing apparatus (50) for processing, in particular checking and/or counting and/or sorting, value documents, and having an introduction module (10) according to one of the preceding claims.

12. Method for feeding value documents, in particular bank notes, to at least one value-document-processing apparatus (50) from an introduction module (10), comprising the following steps:
a) providing at least one container, in which value documents are situated, in a receiving position of a receiving device (13) of the introduction module (10), wherein the receiving device (13) and/or a receiving opening (12) of the introduction module (10) are/is designed in such a way that the orientation of the container (1) in the receiving position is predetermined and reproducible, wherein the receiving device (13) and/or the receiving opening (12) have/has a mechanical rotation-prevention means, on account of which the container (1) can be received in the receiving position only with exactly one orientation, and wherein the container has corresponding asymmetry, or the introduction module (10) has at least one sensor in order to detect the orientation of the container received in the receiving position, wherein in particular a warning is issued if an incorrection orientation is detected,
b) conveying the container in the receiving position from the receiving position into a removal position of the introduction module (10), in which value documents are removed from the container,
c) removing value documents from the container (1) which is in the removal position with the aid of a removal device of the introduction module (10),
d) feeding the value documents removed from the container to a value-document-processing apparatus (50) with the aid of the removal device of the introduction module (10),
e) conveying the container in the removal position from the removal position into a discharge position, in which the container (1) is received by a discharge device (16) of the introduction module (10),
f) removing the container in the discharge position.

## Revendications

1. Module d'entrée (10) pour amener des documents de valeur, notamment des billets de banque, à au moins un dispositif de traitement de documents de valeur (50) avec :
- un appareil de réception (13) pour la réception d'au moins un récipient (1), dans lequel se trouvent des documents de valeur, dans une position de réception dans laquelle l'au moins un récipient peut être fourni, l'appareil de réception (13) et/ou une ouverture de réception (12) du module d'entrée (10) étant configuré de telle sorte que l'orientation du récipient (1) dans la position de réception est prédéterminée et reproductible, l'appareil de réception (13) et/ou l'ouverture de réception (12) présentant une protection mécanique contre la torsion, en raison de laquelle le récipient (1) ne peut être reçu dans la position de réception que dans exactement une orientation et le récipient présentant une asymétrie correspondante, ou le module d'entrée (10) ayant au moins un capteur pour détecter l'orientation du récipient reçu dans la position de réception, un avertissement étant émis notamment si une orientation erronée est détectée,
- un appareil de prélèvement (27) pour prélever des documents de valeur dans un récipient (1) se trouvant dans une position de prélèvement et pour amener les documents de valeur prélevés à un dispositif de traitement de documents de valeur (50),
- un appareil de distribution (16) pour recevoir au moins un récipient (1) dans une position de distribution dans laquelle le récipient (1) peut être prélevé, et
- un appareil d'acheminement (25, 26) qui est configuré pour acheminer un récipient se trouvant dans la position de réception de la position de réception à la position de prélèvement, dans laquelle des documents de valeur peuvent être prélevés dans le récipient par l'appareil de prélèvement, et qui est configuré pour acheminer un récipient se trouvant dans la position de prélèvement de la position de prélèvement à la position de distribution, dans laquelle le récipient (1) peut être reçu par l'appareil de distribution (16).

2. Module d'entrée (10) selon la revendication 1, dans lequel le récipient (1) se trouvant dans la position de prélèvement, duquel les documents de valeur sont prélevés et amenés à un dispositif de traitement de documents de valeur (50), est un premier récipient, et en ce que l'appareil d'acheminement(25, 26) est configuré pour acheminer un deuxième récipient (2) de telle sorte que
- le premier récipient (1) se trouvant dans la position de prélèvement est transporté par le deuxième récipient (2) acheminé par l'appareil d'acheminement (25, 26) de la position de prélèvement à la position de distribution dans laquelle le premier récipient (1) peut être reçu par l'appareil de distribution (16), et
- le deuxième récipient (2) est ensuite acheminé dans la position de prélèvement.

3. Module d'entrée (10) selon la revendication 2, dans lequel l'appareil d'acheminement (25, 26) pour l'acheminement du deuxième récipient (2) est configuré de telle sorte que, lors du transport du premier récipient (1) de la position de prélèvement à la position de distribution, le deuxième récipient (2) touche un côté, notamment le côté inférieur, du premier récipient (1) .

4. Module d'entrée (10) selon la revendication 2 ou 3, dans lequel l'appareil d'acheminement (25, 26) pour l'acheminement du deuxième récipient (2) est configuré de telle sorte que, lors du transport du premier récipient (1) de la position de prélèvement à la position de distribution, le deuxième récipient (2) s'amarre au premier récipient (1) et/ou s'accouple au premier récipient (1).

5. Module d'entrée (10) selon l'une quelconque des revendications 2 à 4, dans lequel l'appareil d'acheminement (25, 26) est configuré pour acheminer le deuxième récipient (2) de telle sorte que, lors du transport du premier récipient (1) de la position de prélèvement à la position de distribution, le premier récipient (1) est soulevé ou poussé par le deuxième récipient (2).

6. Module d'entrée (10) selon l'une quelconque des revendications précédentes, avec un boîtier (11) qui présente :
- une ouverture de réception (12) au niveau de laquelle l'appareil de réception (13) est prévu,
- une ouverture de prélèvement (14) au niveau de laquelle l'appareil de prélèvement (27) est prévu, de telle sorte que les documents de valeur prélevés dans le récipient (1) se trouvant dans la position de prélèvement peuvent être amenés à travers l'ouverture de prélèvement (14) à un dispositif de traitement de documents de valeur (50), et
- une ouverture de distribution (15), au niveau de laquelle l'appareil de distribution (16) est prévu.

7. Module d'entrée (10) selon l'une quelconque des revendications précédentes, avec un appareil d'alignement (23) pour aligner des documents de valeur se trouvant dans un récipient (1', 2, 3).

8. Module d'entrée (10) selon la revendication 7, dans lequel l'appareil d'orientation (23) est conçu pour mettre le récipient (1', 2, 3) dans un mouvement d'oscillation, dans lequel le récipient (1', 2, 3) est déplacé alternativement dans une première direction et dans une deuxième direction opposée à la première direction, la vitesse (v) de déplacement du récipient (1', 2, 3) dans la première direction augmentant jusqu'à l'instant (t_{A}) d'inversion de la direction et la vitesse (v) de déplacement du récipient (1', 2, 3) dans la deuxième direction diminuant après l'instant (t_{A}) d'inversion de la direction.

9. Module d'entrée (10) selon l'une quelconque des revendications précédentes avec une unité d'acheminement (25, 26) pour un acheminement du récipient (2) de telle sorte que le récipient (2) est acheminé dans un mouvement rectiligne, notamment dans la direction verticale, de l'appareil d'alignement (23) vers la position de prélèvement et/ou de la position de prélèvement en direction de la position de distribution et de nouveau vers la position de prélèvement.

10. Module d'entrée (10) selon l'une quelconque des revendications précédentes, dans lequel le module d'entrée (10) est configuré pour être mobile, notamment pour pouvoir être approché d'un dispositif de traitement de documents de valeur (50).

11. Système (10, 50) de traitement de documents de valeur, notamment de billets de banque, avec un dispositif de traitement de documents de valeur (50) pour le traitement, notamment le contrôle et/ou le comptage et/ou le triage, de documents de valeur et un module d'entrée (10) selon l'une quelconque des revendications précédentes.

12. Procédé pour amener des documents de valeur, notamment des billets de banque, d'un module d'entrée (10) à au moins un dispositif de traitement de documents de valeur (50), avec les étapes suivantes :
a) la fourniture d'au moins un récipient, dans lequel se trouvent des documents de valeur, dans une position de réception d'un appareil de réception (13) du module d'entrée (10), l'appareil de réception (13) et/ou une ouverture de réception (12) du module d'entrée (10) étant configuré de telle sorte que l'orientation du récipient (1) dans la position de réception est prédéfinie et reproductible, l'appareil de réception (13) et/ou l'ouverture de réception (12) présentant une protection mécanique contre la torsion, en raison de laquelle le récipient (1) ne peut être reçu dans la position de réception que dans exactement une orientation et le récipient présentant une asymétrie correspondante, ou le module d'entrée (10) ayant au moins un capteur pour détecter l'orientation du récipient reçu dans la position de réception, un avertissement étant émis notamment si une orientation erronée est détectée,
b) l'acheminement du récipient se trouvant dans la position de réception de la position de réception à une position de prélèvement du module d'entrée (10), dans laquelle des documents de valeur sont prélevés du récipient,
c) le prélèvement de documents de valeur dans le récipient (1) se trouvant dans la position de prélèvement à l'aide d'un appareil de prélèvement du module d'entrée (10),
d) l'amenée des documents de valeur prélevés dans le récipient à un dispositif de traitement de documents de valeur (50) à l'aide de l'appareil de prélèvement du module d'entrée (10),
e) l'acheminement du récipient se trouvant dans la position de prélèvement de la position de prélèvement à une position de distribution, dans laquelle le récipient (1) est reçu par un appareil de distribution (16) du module d'entrée (10),
f) le prélèvement du récipient se trouvant dans la position de distribution.
